# EUROPEAN PATENT APPLICATION

(11) **EP 0 631 862 A1**
(43) Date of publication of application: **04.01.1995**
(21) Application number: 94303681.4
(22) Date of filing: 23.05.1994
(51) Int. Cl.: B32B 27/00

(54) **Aircraft interior panels**

(30) Priority: 01.06.1993 US 70142
(71) Applicant: GENERAL ELECTRIC COMPANY, Schenectady, NY 12345 (US)
(72) Inventor: Hall, Walter Lawrence, Mount Vernon, Indiana 47620 (US)
(74) Representative: Pratt, Richard Wilson

(57) **Abstract**

Shaped thermoplastic composite panels for aircraft interiors are provided having a lofted structure and containing reinforcing glass fibers and a thermoplastic resin matrix employing resins that have high glass transition temperatures. The panels are prepared by a process involving forming a dilute aqueous slurry of polymer particulates and reinforcing glass fibers, collecting the polymer particulates and glass fibers in the form of a continuous mat by dewatering the slurry over a porous support, drying the mat to remove residual water from the mat, consolidating the mat under pressure at an elevated temperature, low pressure match molding of the mat at an elevated temperature to create a solid, lofted shaped panel, and cooling the shaped panel in the mold. The panels are lofted to provide sound insulation and absorption, resistance to fire penetration, reduced flame spread and low smoke generation.

## Description

### BACKGROUND OF THE INVENTION

### Field of the Invention

The present invention relates to thermoplastic composite panels for aircraft interiors, and more particularly relates to thermoplastic composite aircraft panels for aircraft interiors wherein the panels have a thermoplastic resin matrix and lofted glass reinforcing fibers.

### Description of the Related Art

Aircraft interior panels made from heat resistant thermoplastic materials such as polyetherimide resin or polyether ether ketone resin are well known. Such resins are typically used because of their heat resistance and inherent flame resistant characteristics. There is however, a strong interest in finding aircraft interior panels which exhibit improved sound absorption characteristics, fire penetration resistance, reduced levels of flame spread, and reduced levels of smoke generation.

### Summary of the Invention

This invention provides shaped thermoplastic composite panels for aircraft interiors. The panels contain reinforcing glass fibers and a heat resistant thermoplastic resin. The panels have a lofted structure having a relatively low density. The panels are made by a process involving forming a dilute aqueous slurry of the thermoplastic resin in particulate form and the reinforcing glass fibers, collecting the resin particulates and glass fibers in the form of a continuous mat by dewatering the slurry over a foraminous support, drying the mat to remove residual water from the mat, consolidation of the mat in a flat hot press to force air out of the mat and to cause the resin to flow onto the fibers and low pressure match mold shaping of the mat at elevated temperatures, to allow the fibers to loft, followed by cooling to create a lofted shaped panel. The panels will exhibit high levels of sound absorption, resistance to fire penetration and flame spread, and low smoke generation.

### Brief Description of the Drawings

Figure 1 is a top plan view of a panel (10) made pursuant to the present invention;
Figure 2 is a side elevation cross sectional view of the panel of Figure 1 along lines 2-2;
Figure 3 is a top plan view of a shaped panel (10') made pursuant to the present invention; and
Figure 4 is a side elevational cross sectional view of the panel (10') of figure 3 along lines 4-4.

### Detailed Description of the Invention

The shaped thermoplastic composite panels of this invention have (a) reinforcing glass fibers present at a level of from 30% to 60% by weight based on the total weight of the panel, wherein the fibers have lengths selected from between 0.10 inch and 2.0 inches, and (b) thermoplastic resin present at a level of from 40% to 70% by weight based on the total weight of the panel, wherein the resin has a glass transition temperature of greater than 200° C, and the panel has a lofted structure having an average density of less than 1.5 g/cm³.

The aircraft interior panels are made by a process comprising (a) forming a dilute aqueous slurry of a solid, water insoluble, heat-fusible organic polymer in particulate form and reinforcing glass fibers having lengths of from 0.10 inch to 2.0 inches, (b) collecting the polymer particulates and glass fibers in the form of a continuous mat by dewatering the slurry over a foraminous support, (c) drying the mat to remove residual water from the mat, (d) consolidating the mat by applying pressure to the mat at an elevated temperature to force air from the mat and to cause the resin to wet out the fibers, and (e) low pressure match mold shaping of the mat at an elevated temperature to create a solid, lofted panel (10) or shaped panel (10').

The process of this invention involves (a) an aqueous medium, optionally (b) a binder, usually at least partially in the form of a latex which contains either anionic or cationic bound charges, (c) a heat-fusible organic polymer (resin) which is in particulate form, (d) reinforcing glass fibers, and (e) optionally a flocculent.

In the process, a dilute aqueous slurry is prepared containing the heat fusible organic polymer particulates and the reinforcing fibers. The slurry is agitated and then uniformly distributed onto a porous support (foraminous support) and is allowed to drain to form a wet mat, the wet mat is optionally passed through press rolls and then dried, such as passing the wet mat through a series of heated dryer rolls to obtain a dried mat which optionally is rolled onto a cylinder or collected as a flat sheet stock. The dried mat may then be subjected to various kinds of treatment for the intended use such as compression molding the dried mat into articles. Optionally, a binder material is employed in the dilute aqueous slurry and the solids are flocculated during agitation with a polymeric flocculent having an opposite charge to that of the latex binder. Suitable binders and flocculents are set forth in Wessling et al., U.S. Patent No. 4,426,470 issued January 17, 1984 which is incorporated herein by reference. Suitable latexes which can be used in the present invention include those described in U.S. Pat. No. 4,056,501, issued November 1, 1977, to Gibbs et al., incorporated herein by reference.

The invention requires a normally solid, heat fusible organic polymer. By "heat fusible" is meant that the polymer particles are capable of deformation under heat to join into an unitary structure. The heat fusible polymers may be either thermoplastic or thermoset resins. The heat fusible organic polymer component of the present invention is desirably a hydrophobic, water-insoluble polymer. These polymers are in particulate form and may be in the form of a powder or a dispersion. Suitable heat fusible organic polymers have a glass transition temperature of greater than 200° C, more preferably from 210° C to 350° C, and include addition and condensation polymers such as, for example, polyphenylene sulfide resins; aromatic polyesters; polyamide resins; polyetherimide resins, polyether ether ketones, polyamideimides and polyether sulfones. The polymer particulates generally and advantageously have a particle size in the range of 1 to 400 microns. The polymers are generally employed in an amount of from about 40% to 70% by weight of the composite panel, more preferably from 40% to 60% by weight thereof, and most preferably from 45% to 55% by weight thereof. A particularly preferred organic polymer is a polyetherimide resin sold under the trademark Ultem ® resin by General Electric Company. Suitable polyetherimide resins are described by Williams et al., U.S. Pat. No. 3983093 and Holub et al. both of which are incorporated herein by reference. Of course, blends of these polymers may be used.

The reinforcing glass fibers preferably and advantageously comprise glass fibers such as chopped glass strands having a length of 1/8 to 1 inch (about 3.2 to 25.4 mm), milled glass fibers which generally have a length of about 1/32 to 1/8 inch (about 0.79 to 3.2 mm) and mixtures thereof. The glass fibers are advantageously heat cleaned and, to improve impact properties, such fibers may be compatibilized by having a thin coating of, for example a polyolefin resin or starch thereon. The fibers are preferably surface treated with chemical sizing or coupling agents which are well known in the art. The reinforcing material generally comprises from about 30 to about 60 weight percent of the composite panel or, more preferably from 40 to 60 weight percent of the composite panel, and most preferably from 45% to 55% by weight of the composite panel. The process of the present invention for making an aircraft interior panel involves (a) forming a dilute aqueous slurry of a solid, water insoluble, heat-fusible organic polymer in particulate form and reinforcing glass fibers, wherein the glass fibers have lengths of 0.10 inch to 2.0 inches, (b) collecting the polymer particulates and glass fibers in the form of a continuous mat by dewatering the slurry over a porous (foraminous) support, (c) drying the mat to remove most of the residual water from the mat, (d) consolidation of the dried mat under pressure at an elevated temperature (for example, above the polymers glass transition temperature) to wet out the fibers with the resin and to forced air out of the mat, and (e) low pressure match mold shaping of the consolidated mat at an elevated temperature to create a solid, lofted shaped panel. Match molding involves using male and female mold plugs to conform the mat to the desired panel shape. Low pressure match molding means employing a pressure sufficiently low to permit the mat to exhibit a lofted structure during cooling of the mat so that the final panel will exhibit a shaped, lofted structure. Shaping of the mat into the final shaped panel involves heating the mat sufficiently to allow shaping of the mat, match molding the mat so as to give the mat the desired shape, and cooling the mat sufficiently to permit the thermoplastic matrix resin to solidify while the mat is in a lofted shape. An indicator of lofting is its specific gravity which is preferably less than 1.5 g/cm³, more preferably 0.5 to 1.0 g/cm³, and more preferably between 0.7 and 1.0 g/cm³.

The composite panel of the invention may also, optionally, contain a variety of other ingredients. Minor amounts, for example, 10-33% by weight, of fillers such as silicon dioxide (Novacite), CaCO₃, MgO, CaSiO₃ (wollastonite) and mica may be incorporated in the composites of this invention if desired. Pigments or dyes may be added to impart opacity and/or color. Various chemical additives such as antioxidants, UV stabilizers, thickeners, foaming agents, anti-foaming agents, bactericides, electromagnetic radiation absorption agents, etc., may also be used.

This method is conveniently and preferably carried out by first stirring the reinforcing material in water until it is uniformly disbursed, then slowly adding the heat-fusible polymer, and stirring the materials throughout this portion of the process. This slurry of water, heat-fusible polymer, reinforcing material and optionally latex binder and flocculent preferably has a total solids content of 0.01 to 5% solids by weight, and more preferably 0.02 to 0.5% solids by weight based on the total weight of the slurry. The slurry thus preferably contains at least 95% by weight water based on the total weight of the slurry.

The mat-forming and dewatering process may be accomplished by any conventional paper making apparatus such as a sheet mold or a Fourdrinier or cylinder machines.

After the mat is formed into a dewatered sheet, it may be desirable to densify the sheet by pressing it with a flat press or by sending it through calendering rolls. The mat can be maintained in a compressed or lofted form prior to the shaping step, but due to the tendency of the mat to loft upon reheating, the mat will be lofted prior to the shaping step. Drying of the mat may be either air drying at ambient temperatures or oven drying.

The particular shape of the panel depends on the desired application and use for the particular panel, and may be, for example, a rectangular sheet of, for example, 2' x 4' x 1/2'' or may be a shaped panel depending on the desired shape of the final item or component. Thickness may vary from 0.1 inch to 1.0 inch, preferably from 0.2 inch to 0.8 inch, and most preferably between 0.25 and 0.75 inch.

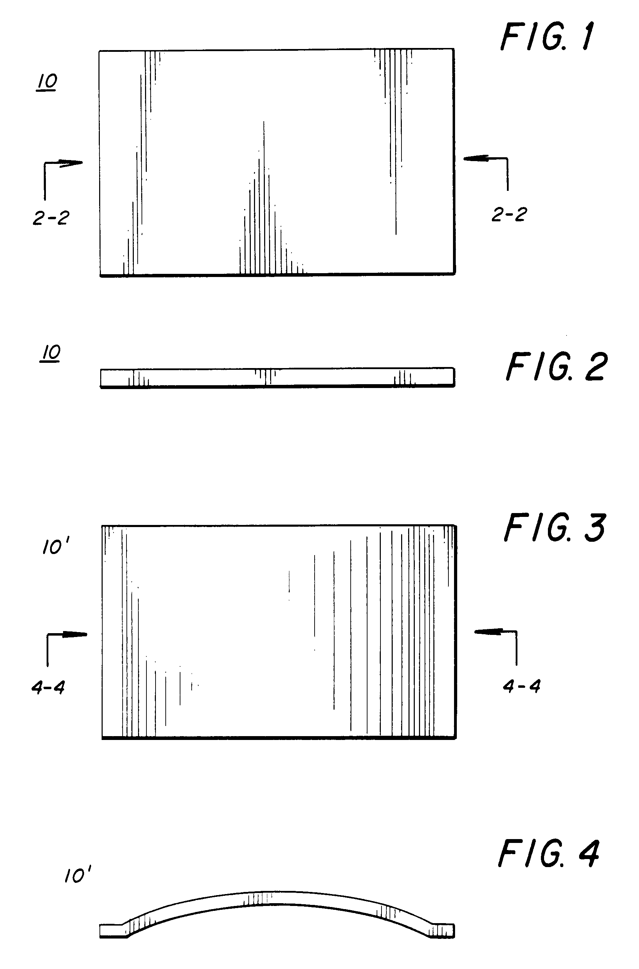

Figures 1 and 2 show a panel in flat sheet form, and figures 3 and 4 show a shaped panel having a substantially rectangular top view and a curved side elevational cross-sectional view.

## Claims

1. A thermoplastic composite panel for aircraft interiors, said panel comprising: (a) reinforcing glass fibers present at a level of from 30% to 60% by weight based on the total weight of said panel, said fibers having lengths selected from between 0.10 inch to 2.0 inches,
(b) thermoplastic matrix resin present at a level of from 40% to 70% by weight based on the total weight of said panel, said resin having a glass transition temperature of greater than 200° C, said panel being a lofted structure having an average density of less than 1.50 g/cm³.

2. The panel of claim 1 wherein said thermoplastic resin is selected from the group consisting of polyetherimides, polyphenylene sulfides, polyether ether ketones, aromatic polyamides, polyamideimides, polyether sulfones and aromatic polyesters.

3. The panel of claim 1 wherein said resin has a glass transition temperature selected from between 210° C and 350° C.

4. The panel of claim 1 wherein said panel has an average density of between 0.5 g/cm³ and 1.5 g/cm³.

5. The panel of claim 1 wherein said panel consists essentially of said reinforcing glass fibers and said thermoplastic resin.

6. An aircraft interior panel made by a process comprising:
a) forming a dilute aqueous slurry of a solid, water insoluble, heat-fusible organic polymer in particulate form and reinforcing glass fibers having lengths of from 0.10 inch to 2.0 inches,
b) collecting the polymer particulates and glass fibers in the form of a continuous mat by dewatering the slurry over a foraminous support,
c) drying the mat to remove residual water from the mat,
d) consolidating the mat under pressure and at an elevated temperature to force air out of the mat and to cause the polymer to wet out the fibers, and
e) low pressure match mold shaping of the mat to an elevated temperature followed by cooling of the mat to create a solid, lofted shaped panel.

7. The process of claim 6 wherein said thermoplastic resin is present in said panel at a level of from between 40% to 70% by weight based on the total weight of said panel, said glass fibers being present at a level of from between 30% to 60% by weight based on the total weight of said panel.

8. The process of claim 6 wherein said slurry comprises at least 95% by weight water.

9. The process of claim 6 wherein said panel has an average density of between 0.5 g/cm³ and 1.5 g/cm³.

10. The process of claim 6 wherein said process consists essentially of said forming, collecting, drying, consolidating and shaping.
